# EUROPÄISCHE PATENTSCHRIFT

(11) **EP 3 159 228 B1**
(45) Veröffentlichungstag und Bekanntmachung des Hinweises auf die Patenterteilung: **12.12.2018**
(21) Anmeldenummer: 16194169.5
(22) Anmeldetag: 17.10.2016
(51) Int. Cl.: B60S 3/00

(54) **REINIGUNGSEINRICHTUNG FÜR EIN SCHIENENFAHRZEUG**
CLEANING DEVICE FOR A RAIL VEHICLE
SYSTÈME DE NETTOYAGE POUR UN VÉHICULE SUR RAILS

(30) Priorität: 21.10.2015 DE 102015220568
(43) Veröffentlichungstag der Anmeldung: 26.04.2017
(73) Patentinhaber: Bombardier Transportation GmbH, 10785 Berlin (DE)
(72) Erfinder: Perez Gomez, Guillermo, 1040 Wien (AT); Monarth, Andreas, 1090 Wien (AT)
(74) Vertreter: Patentanwälte Bressel und Partner mbB

(56) Entgegenhaltungen:
- EP-A2- 0 958 977
- EP-A2- 0 987 155
- DE-A1- 3 535 782
- DE-A1-102004 026 235
- JP-A- H1 159 339
- US-A- 6 154 916
- US-A1- 2002 124 868

## Beschreibung

Die vorliegende Erfindung betrifft eine Reinigungseinrichtung für ein Fahrzeug, insbesondere ein Schienenfahrzeug.

Beim Einsatz von Fahrzeugen des öffentlichen Verkehrs kommt es zwangsläufig im Laufe der Betriebszeit zur Verschmutzung der Fahrzeuge. Die Verschmutzung ist umso stärker, je extremer die Umwelteinflüsse sind, denen das Fahrzeug ausgesetzt ist. Dies können winterliche Verhältnisse sein, wie Schneefall oder Salzstreuung, oder auch Verunreinigungen des Fahrzeugs durch Laub, Staub oder Sand. Besonderen Einfluss kann beispielsweise Sand in küstennahen Gebieten haben, der sich auf den Fahrzeugdächern oder in Winkeln der Struktur ablagert. Dort sammelt sich dann auch Feuchtigkeit an und das Fahrzeug bzw. eine metallische Fahrzeugstruktur wird angegriffen und beginnt zu rosten.

Um diesen Ablagerungen vorbeugen zu können, können kostenintensive und aufwendige Abdeckungen konstruiert und vorgesehen werden, um dem Rosten bzw. dem chemischen Angriff des Materials vorzubeugen. Beispielsweise werden teure Spezialwerkstoffe vorgesehen, wie Edelstahl.

Die effektivste vorbeugende Maßnahme zur Verlängerung der Fahrzeuglebensdauer stellt eine regelmäßige Reinigung der Verschmutzungen dar, bevor das Fahrzeug bzw. das Material oder die Struktur angegriffen werden.

Der Einsatz einer Waschstraße zur Reinigung von Fahrzeugen benötigt sowohl Einsatz von Personal als auch von Wasser und Reinigungsmitteln, was Personalkosten und Materialkosten mit sich bringt. Beim Einsatz von Wasser können Wasserreste bzw. Stauwasser am Fahrzeug verbleiben, die zu weiterer Korrosion führen können.

Reinigungseinrichtungen für Fahrzeuge sind unter anderem bekannt aus EP 0 958 977 A2, US 6,154,916 und DE 10 2004 026 235 A1.

Die Reinigungsvorrichtung aus EP 0 958 977 A2 hat eine Transportvorrichtung für die Karosserie, die durch einen Innenraum der Reinigungsvorrichtung transportierbar und mit Druckluft beaufschlagbar ist. Sie tritt aus einer Seitendüse in Richtung auf die Karosserie aus. Die Vorrichtung weist ferner eine Absaugung für die Druckluft auf. Um die Reinigungsvorrichtung so auszubilden, dass sie konstruktiv einfach aufgebaut und ohne Probleme an den jeweiligen Einsatzfall angepasst werden kann, sind die Seitendüse und die Dachdüse Modulen zugeordnet, die lösbar auf einem Unterteil befestigt sind. Aufgrund der Modulbauweise kann die Reinigungsvorrichtung ohne Probleme erweitert und umgebaut werden.

US 6,154,916 offenbart eine Vorrichtung zum Entfernen von Wasser von der Oberfläche eines Fahrzeugs, wenn das Fahrzeug aus einer Autowaschanlage austritt. Eine bogenförmige Leitung mit einem Gebläse zum Leiten von äußerer atmosphärischer Luft durch diese zusammen mit einer Vielzahl von schwenkbaren Luftaustrittselementen zum Leiten einer Vielzahl von Hochdruckluftströmen in den durch den Leitungsbogen gebildeten Fahrzeugdurchgang.

DE 10 2004 026 235 A1 offenbart eine Vorrichtung zum Reinigen einer zu reinigenden Oberfläche eines zu reinigenden Gegenstandes, insbesondere eines Fahrzeugs, umfassend ein bandförmiges Reinigungselement, eine Einrichtung zum Bewegen des Reinigungselements in seiner Längsrichtung relativ zu dem zu reinigenden Gegenstand und eine Einrichtung zum Anlegen des Reinigungselements an eine unebene zu reinigende Oberfläche in einer Reinigungszone.

Aufgabe der vorliegenden Erfindung ist es, für eines oder mehrere der oben genannten Probleme eine Lösung anzugeben.

Nach einer grundlegenden Idee der Erfindung werden Verschmutzungen von der Oberfläche eines Fahrzeugs abgeblasen. Hierdurch wird Verschmutzung von der Oberfläche aufgewirbelt. Gleichzeitig wird die Verschmutzung bzw. Schmutzpartikel abgesaugt. Das Abblasen erfolgt mit Druckluft, die aus Düsen ausgeströmt wird. Luftausströmöffnungen und Absaugöffnungen sind so angeordnet, vorzugsweise benachbart angeordnet, dass ein Abblasen und Absaugen lokal erfolgen kann. Abblasen und Ansaugen können unmittelbar (aufeinander folgend) stattfinden. Insbesondere ist einer Luftausströmöffnung zumindest eine Absaugöffnung oder umgekehrt einer Absaugöffnung eine Luftausströmöffnung bzw. Ausblasung zugeordnet. Es kann aus der Luftausströmöffnung ein Luftstrom auf eine Fahrzeugoberfläche aufgebracht werden, der dort Schmutz löst. Von der einen oder mehreren Absaugöffnungen wird das Luft-Schmutz-Gemisch abgesaugt.

Die Erfindung ist insbesondere geeignet zum Entfernen von Sand, Staub oder anderweitigen Schmutzpartikeln.

Die vorliegende Erfindung weist in ihrer allgemeinen oder in speziellen Ausführungsformen einen oder mehrere der folgenden Vorteile auf:
- Das Reinigungskonzept erfolgt nicht mittels Wasser, was zu Verklumpungen von Schmutz- oder Sandpartikeln in Nischen des Fahrzeugs führen könnte und daher kosten- bzw. ressourcenintensiv ist, sondern mittels Druckluft.
- Die Reinigung ist umweltverträglich und erfordert keine Rohstoffe wie Wasser oder Reinigungsmittel
- Durch die erfolgende Absaugung wird verhindert, dass sich Ablagerungen am Fahrzeug bilden können.
- Durch Verwendung von standardisierten Teilen kann die Herstellung und Wartung einer nachfolgen beschriebenen Reinigungseinrichtung kostengünstig erfolgen.
- In einer nachfolgend beschriebenen Reinigungseinrichtung können eine Einrichtung zur Erzeugung von Druckluft und eine Absaugeinrichtung verwendet werden, die lediglich eine gemeinsame Energieversorgung erfordern.
- Statt des Abtransports und der Aufarbeitung einer Reinigungsflüssigkeit ist lediglich eine Entleerung eines Sammelbehältnisses einer Absaugeinrichtung erforderlich.
- Das System ist leicht und mobil einsetzbar.
- Die Art der Reinigung und eine nachfolgend beschriebene Reinigungseinrichtung sind für alle Fahrzeuge anwendbar, insbesondere für Fahrzeuge des öffentlichen Personennahverkehrs, wie Busse, Straßenbahnen, Stadtbahnen, U-Bahnen oder eine Vollbahn.
- Bei Verwendung für Fahrzeuge des öffentlichen Personennahverkehrs kann eine nachfolgend beschriebene Reinigungseinrichtung an einer Einfahrt zu einem Depot installiert werden. Dadurch kann eine automatisierte Reinigung der Fahrzeuge bei Einfahrt in das Depot erfolgen.
- Es wird eine Grundreinigung für Fahrzeuge bereitgestellt, die täglich durchgeführt werden kann.

Nachfolgend wird die Erfindung anhand allgemeiner und spezieller Ausführungsformen beschrieben.

Von der Erfindung wird insbesondere eine Reinigungseinrichtung für ein Fahrzeug bereitgestellt, aufweisend
- Eine erste Säule, die in einer Fahrrichtung des Fahrzeugs rechts angeordnet ist und eine zweite Säule, die in einer Fahrrichtung des Fahrzeugs links angeordnet ist, sodass zwischen den Säulen ein Aufenthaltsraum oder Durchfahrtsraum für ein Fahrzeug gebildet ist,
- Luftausströmöffnungen, die an der ersten Säule und an der zweiten Säule angeordnet sind und in Richtung des Aufenthaltsraums oder Durchfahrtsraums weisen,
- Absaugöffnungen, die an der ersten Säule und an der zweiten Säule angeordnet sind und in Richtung des Aufenthaltsraums oder Durchfahrtsraums weisen,
- zumindest eine Einrichtung zur Erzeugung von Druckluft, die über zumindest eine Lufttransportleitung mit den Luftausströmöffnungen verbunden ist,
- zumindest eine Absaugeinrichtung, die über zumindest eine Lufttransportleitung mit den Absaugöffnungen verbunden ist.

Die Absaugeinrichtung weist vorzugsweise ein Sammelbehältnis zum Sammeln von Schmutz auf. In dem Sammelbehältnis wird Schmutz, welcher in dem Luft-SchmutzGemisch vorhanden ist, gesammelt.

Die Säulen der Reinigungseinrichtung können stationär oder verfahrbar sein, insbesondere in Fahrzeuglängsrichtung. In dem Fall, dass die Säulen verfahrbar sind, wird zwischen Ihnen ein Aufenthaltsraum für ein Fahrzeug gebildet, welches während des Betriebs der Reinigungseinrichtung ortsfest ist. Ist die Reinigungseinrichtung stationär und wird das Fahrzeug durch die Reinigungseinrichtung hindurchbewegt, so ist zwischen den Säulen ein sogenannter Durchfahrtsraum gebildet.

Zusätzlich zu erwähnten Säulen kann eine Traverse vorhanden sein, die sich vom oberen Ende der ersten Säule bis zum oberen Ende der zweiten Säule erstreckt und die Säulen miteinander verbindet. Hierdurch wird ein Portal gebildet. An der Traverse können ebenfalls Luftausströmöffnungen und Absaugöffnungen angeordnet sein, welche jeweils nach unten in Richtung des Aufenthaltsraums oder Durchfahrtsraums für ein Fahrzeug weisen. In einer anderen, mehr bevorzugten Variante ist zwischen den Säulen keine durchgehende Traverse vorhanden, sodass im oberen Bereich der Reinigungseinrichtung ein Freiraum gebildet ist, der insbesondere ein Freiraum für Stromabnehmer eines elektrisch betriebenen Schienenfahrzeugs ist. Dennoch können Aufnahmen für Ausblas- und Absaugöffnungen von oben vorhanden sein.

Zwischen der ersten Säule und der zweiten Säule kann ein Gleis angeordnet sein, auf welchem ein Schienenfahrzeug die Reinigungseinrichtung durchfahren kann oder auf welchem ein Schienenfahrzeug während des Betriebs der Reinigungseinrichtung verweilen kann.

Luftausströmöffnungen und Absaugöffnungen können an den Säulen so angeordnet sein, dass sie in eine oder mehrere der folgenden Richtungen weisen:
- in Richtung einer Seitenwand des Fahrzeugs,
- in Richtung eines Daches des Fahrzeugs,
- in Richtung eines Unterbodens des Fahrzeugs,
- in Richtung der dazwischen liegenden Kanten und
- in Richtung der Fahrzeug Front und/oder des Fahrzeug Hecks

Oben genannte Varianten können einzeln oder in beliebiger Kombination vorhanden sein. Säulen können entsprechend ausgestaltet sein, diese Kombinationen zu ermöglichen. Beispielsweise können die Säulen L-förmig, in Form eines normal stehenden L oder in Form eines auf dem Kopf gestellten L, oder C-förmig ausgebildet sein. Hierauf wird anhand nachfolgender Ausführungsformen noch eingegangen.

In einer Ausführungsform der Erfindung sind die erste Säule und die zweite Säule ortsfest. In dieser Ausführungsform wird das oben bereits angedeutete Prinzip realisiert, dass ein Fahrzeug die Reinigungsanlage durchfährt und dabei gereinigt wird. Diese Ausführungsform ist insbesondere dann vorteilhaft, wenn die Reinigungseinrichtung an einer Einfahrt zu einem Bahn- oder Busdepot installiert wird. Da Fahrzeuge diese Einfahrt ohnehin durchfahren, können sie bei Einfahrt, alternativ oder zusätzlich bei Ausfahrt, gereinigt werden.

In einer Ausführungsform sind an der ersten Säule und an der zweiten Säule die Luftausströmöffnungen und die Absaugöffnungen ineinander verteilt angeordnet. Insbesondere können Luftausströmöffnungen und Absaugöffnungen abwechselnd angeordnet sein. Luftausströmöffnungen und Absaugöffnungen können über eine Fläche verteilt, vorzugsweise abwechselnd, angeordnet sein. Benachbarte Luftausströmöffnungen und Absaugöffnungen können miteinander zusammenwirken, indem ein aus einer Luftausströmöffnung ausgebrachter Luftstrom, der Schmutzpartikel aufwirbelt und aufnimmt, von einer benachbarten Absaugöffnung abgesaugt wird. In dieser Ausführungsform können Luftausströmöffnungen und Absaugöffnungen jeweils ein regelmäßiges Muster ausbilden. Diese Muster können ineinander greifen. Hierdurch wird in einer Variante eine Verteilung der Luftausströmöffnungen und die Absaugöffnungen ineinander erreicht. In noch einer Variante ist eine Luftausströmöffnung von mehreren Absaugöffnungen umgeben. Diese Variante ist insbesondere dann vorteilhaft, wenn die Luftausströmöffnungen als rotierende Düsen ausgestaltet sind, wie unten beschrieben.

In einer Ausführungsform sind an der ersten Säule und an der zweiten Säule die Absaugöffnungen in Fahrrichtung des Fahrzeugs vor oder hinter den Luftausströmöffnungen angeordnet.

Luftausströmöffnungen sind insbesondere Düsen. In einer Ausführungsform der Erfindung sind die Luftausströmöffnungen rotierende Düsen. Hierdurch kann von je einer Düse ein größerer Flächenbereich der Oberfläche des Fahrzeugs erreicht werden. Die Düsen können so ausgestaltet sein, dass sie sich automatisch durch den Luftdruck hindurchströmender Luft drehen. Dadurch kann die Flächenabdeckung der zu reinigenden Oberfläche des Fahrzeugs verbessert werden.

In einer Ausführungsform weist die Reinigungseinrichtung folgende Merkmale auf:
- Die erste Säule weist einen Ausleger an einem oberen Ende auf, der nach innen gerichtet ist,
- die zweite Säule weist einen Ausleger an einem oberen Ende auf, der nach innen gerichtet ist,
- die Luftausströmöffnungen und die Absaugöffnungen sind zumindest teilweise an den Auslegern angeordnet.

In vorangehender Ausführungsform weisen die Säulen insbesondere die Form eines auf dem Kopf stehenden L auf. Die Ausleger weisen aufeinander zu. Luftausströmöffnungen und Absaugöffnungen sind an den Unterseiten der Ausleger angeordnet und weisen nach unten. Somit weisen genannte Öffnungen in Richtung eines Daches eines zwischen den Säulen befindlichen Fahrzeugs, wenn ein Fahrzeug zwischen den Säulen hindurchfährt oder zwischen den Säulen positioniert ist. Es ist somit mit dieser Ausführungsform eine effektive Reinigung eines Daches oder von Randbereichen eines Daches ermöglicht.

In einer Variante der vorangehenden Ausführungsform ist zwischen dem ersten Ausleger und dem zweiten Ausleger ein Zwischenraum gebildet. Hierbei bildet die erste Säule ein auf dem Kopf stehendes L und die zweite Säule ein dazu spiegelverkehrtes auf dem Kopf stehendes L aus. Die oberen Schenkel des L sind voneinander beabstandet und zwischen Ihnen ist ein Zwischenraum gebildet, der auf der Oberseite der Durchfahrt angeordnet ist. Man erhält hierdurch ein unterbrochenes Portal, bei dem die Durchfahrt nach oben offen ist. Der Zwischenraum ermöglicht ein Durchfahren eines strombetriebenen Schienenfahrzeugs mit Stromabnehmern, die über das Dach hinausragen. Dachbereiche neben den Stromabnehmern, also insbesondere Randbereiche, können von den Auslegern überstrichen und gereinigt werden.

In einer Variante der Erfindung sind erwähnte Ausleger in ihrer Länge veränderbar. Beispielsweise kann ein Ausleger aus zwei Teilen gebildet sein, die gegeneinander verschiebbar sind. Durch Änderung der Länge eines Auslegers oder beider Ausleger ist es möglich, die Größe, bzw. die Breite des erwähnten Zwischenraums zu ändern. Hierdurch kann die Reinigungseinrichtung an verschiedene Dachaufbauten angepasst werden.

In einer weiteren Ausführungsform wird eine Reinigungseinrichtung angegeben, wobei
- die erste Säule einen Fuß an einem unteren Ende aufweist, der nach innen gerichtet ist,
- die zweite Säule einen Fuß an einem unteren Ende aufweist, der nach innen gerichtet ist,
- wobei die Luftausströmöffnungen und die Absaugöffnungen zumindest teilweise an den Füßen angeordnet sind.

In vorangehender Ausführungsform weisen die Säulen insbesondere eine L-Form auf, wobei erste und zweite Säule spiegelbildlich zueinander stehen. Wenn vorangehend beschriebene Auslegere am oberen Ende vorhanden sind, weisen die Säulen insbesondere eine C-Form auf. Luftausströmöffnungen und Absaugöffnungen sind auf der Oberseite der Füße angeordnet und weisen nach oben. Somit sind genannte Öffnungen auf einer Unterseite bzw. einem Unterboden, insbesondere Randbereiche eines Unterbodens, eines Fahrzeugs gerichtet. Es kann somit in dieser Ausführungsform eine effektive Reinigung eines Unterbodens oder von Bereichen davon erfolgen.

Wenn in vorangehenden Ausführungsformen beschrieben ist, dass Luftausströmöffnungen und Absaugöffnungen zumindest teilweise an einem Ausleger oder einem Fuß angeordnet sind, so bedeutet dies insbesondere, dass weitere Absaugöffnungen und Luftausströmöffnungen in einem aufstrebenden Bereich der Säulen angeordnet sind. Derartige Öffnungen weisen zur Seite, in Richtung einer Seitenwand eines zwischen den Säulen befindlichen Fahrzeugs. Es sind aber auch Ausführungsformen denkbar, wo Luftausströmöffnungen und Absaugöffnungen lediglich an einem Ausleger und/oder an einem Fuß angeordnet sind.

In einer Ausführungsform der Erfindung ist der Abstand zwischen der ersten Säule und der zweiten Säule veränderbar. Die erste Säule und die zweite Säule können somit aufeinander zu- oder voneinander wegbewegt werden. Hierdurch wird eine Anpassung der Reinigungseinrichtung an verschieden breite Fahrzeuge ermöglicht. Eine Anpassung an die Fahrzeugbreite kann automatisiert erfolgen, beispielsweise durch eine Breitenerkennung mittels Sensoren oder über eine Fahrzeug(typ)erkennung, wobei zu dem betreffenden Fahrzeug eine Breiteninformation hinterlegt ist.

In einer weiteren Ausführungsform sind die erste Säule und die zweite Säule höhenverstellbar. Hierdurch kann die Reinigungseinrichtung an verschieden hohe Fahrzeuge angepasst werden, was insbesondere zur Anwendung kommt, wenn oben beschriebene Ausleger an oberen Enden der Säulen realisiert sind. Die Höhenverstellbarkeit kann bedeuten, dass die Säulen in Gänze nach oben oder unten verschiebbar sind und/oder dass die Säulen verlängerbar oder verkürzbar sind, beispielsweise durch einen Verschiebemechanismus.

In einer Ausführungsform weist die Reinigungseinrichtung eine Bilderfassungseinrichtung auf, die zur Erfassung des Verschmutzungszustandes eines Fahrzeugs nach einem Durchfahren der Reinigungseinrichtung eingerichtet ist. Die Bilderfassungseinrichtung ist vorzugsweise mit einer Auswertungseinrichtung gekoppelt, die eine Bildauswertung hinsichtlich des Verschmutzungszustandes vornehmen kann. Bei Feststellung eines unerwünscht hohen Verschmutzungsgrades nach Durchfahren der Reinigungseinrichtung kann der Reinigungsvorgang wiederholt werden. Zusätzlich zur erwähnten ersten Bilderfassungseinrichtung kann eine weitere Bilderfassungseinrichtung vorhanden sein, die zur Erfassung des Verschmutzungszustandes des Fahrzeugs vor dem Durchfahren der Reinigungseinrichtung eingerichtet ist. In dieser Variante können vor und nach Reinigung erfasste Bilder verglichen werden und festgestellt werden, ob das Fahrzeug gründlich genug gereinigt wurde. Beide Bilderfassungseinrichtungen weisen vorzugsweise den gleichen Blickwinkel auf. Ein Vergleich der Bilder beider Erfassungseinrichtungen und eine Feststellung des Reinigungserfolgs können automatisiert erfolgen, beispielsweise mittels einer Software. Position und/oder Blickwinkel einer Bilderfassungseinrichtung können verstellbar sein.

In einer Ausführungsform weist die Reinigungseinrichtung zumindest einen Sensor auf, der ausgestaltet ist, ein Einfahren eines Fahrzeugs in die Reinigungseinrichtung zu detektieren. Der Sensor kann als Schalter ausgestaltet sein, sodass bei einer Erzeugung eines Sensorsignals die Reinigungseinrichtung in Betrieb gesetzt wird. Der Sensor ist in Fahrrichtung insbesondere vor den Säulen angeordnet. Es kann auf beiden Seiten der Säulen jeweils zumindest ein Sensor vorgesehen sein, die den Fahrweg überwachen. Hierdurch können Fahrtwege in beiden Fahrrichtungen überwacht werden.

In einer Ausführungsform weist die Reinigungseinrichtung einen Bodenbereich auf, der einen Gleisabschnitt für ein Schienenfahrzeug aufweist oder zur Verlegung eines Gleises vorbereitet oder ausgestaltet ist.

Weiterhin wird von der Erfindung eine Anordnung aus mehreren beschriebenen Reinigungseinrichtungen angegeben. In dieser Anordnung sind zumindest zwei Reinigungseinrichtungen hintereinander in Fahrrichtung angeordnet. Durch eine solche Anordnung kann eine noch effektivere Reinigung erreicht werden, da ein Fahrzeug nach einer ersten Reinigungseinrichtung noch zumindest eine weitere Reinigungseinrichtung durchfährt.

Die Erfindung betrifft in einem weiteren Aspekt ein Verfahren zur Reinigung eines Fahrzeugs, wobei eine Reinigungseinrichtung wie vorangehend beschrieben eingesetzt wird, und aufweisend die Schritte
- Strömen von Luft, die aus den Luftausströmöffnungen der Reinigungseinrichtung ausströmt, auf eine Oberfläche des Fahrzeugs, wobei Schmutz von der Oberfläche gelöst wird und ein Luft-Schmutzgemisch gebildet wird,
- Absaugen des Luft-Schmutzgemisches durch Absaugöffnungen der Reinigungseinrichtung.

In dem Verfahren kann jede vorangehend beschriebene Reinigungseinrichtung, gemäß allgemeiner oder spezieller Ausführungsform eingesetzt werden. Alle gegenständlich, verfahrensartig und/oder funktionell beschriebenen Merkmale einer erfindungsgemäßen Reinigungseinrichtung können einzeln oder in beliebiger Kombination Anwendung finden. Oberflächen sind Außenflächen, insbesondere an Seitenwänden, Dach und/oder Boden. Schmutz kann alles sein, was auf der Oberfläche des Fahrzeugs unerwünscht ist. Schmutz kann grobteilig sein, wie zum Beispiel Blätter oder Blüten, oder feinteilig, wie Sand, Staub, Erdpartikel.

Nachfolgend wird die Erfindung anhand von Ausführungsbeispielen beschrieben. Es zeigen:
- Fig. 1: eine erfindungsgemäße Reinigungseinrichtung,
- Fig. 2: eine Verteilung von Luftausströmöffnungen und Absaugöffnungen in einer seitlichen Ansicht und
- Fig. 3: die Verteilung nach Fig. 2 in einer Draufsicht.

Die Reinigungseinrichtung 1 weist die erste Säule 2 auf, die in der Fahrrichtung F eines auf dem Gleis 4 fahrenden Fahrzeugs rechts angeordnet ist, und die zweite Säule 3, die in der Fahrrichtung F links angeordnet ist. Zwischen den Säulen 2, 3 ist das Gleis 4 hindurchgeführt. Somit ist zwischen den Säulen 2, 3 ein Durchfahrtsraum 5 für das hier nicht dargestellte Schienenfahrzeug gebildet.

An der ersten Säule 2 sind die Luftausströmöffnungen 6 vorgesehen, von denen mehr als die hier beispielhaft gezeigten vorhanden sein können und von denen nur einige beispielhaft mit Bezugszeichen versehen sind. Aus den Luftausströmöffnungen 6 entströmt die pfeilförmig dargestellte Druckluft L. Einige Luftausströmöffnungen sind im aufstrebenden Teil 7 der Säule angeordnet, einige in dem Ausleger 8 und einige in dem Fuß 9. Die Luftausströmöffnungen 6 am aufstrebenden Teil 7 sind nach innen gerichtet und weisen in Richtung des Durchfahrtsraums 5 und auf eine Seitenwand eines hier nicht dargestellten Fahrzeugs, wenn dieses die Reinigungseinrichtung 1 durchfährt. Die Luftausströmöffnungen 6 am Ausleger 8 sind nach unten gerichtet und dort ausströmende Luft L trifft auf das Dach eines Schienenfahrzeugs. Die Luftausströmöffnungen 6 am Fuß 9 sind nach oben gerichtet und treffen auf einen Boden eines durchfahrenden Schienenfahrzeugs, der über das Gleis 4 hervorsteht.

Die Luftausströmöffnungen 6 sind mit der Lufttransportleitung 10 verbunden, die Druckluft transportiert, welche von der Einrichtung 11 zur Erzeugung der Druckluft, einem Kompressor, erzeugt und in die Leitung 10 eingespeist wird. Der Kompressor 11 ist mit einer hier nicht dargestellten Luftansaugöffnung verbunden, durch welche er Frischluft aus der Umgebung zieht. Die Luftansaugöffnung ist beispielsweise auf der Außenseite der Säule 2 angeordnet.

Weiterhin weist die erste Säule 2 Absaugöffnungen 12 auf, die neben den Luftausströmöffnungen 6 angeordnet sind und diesen zugeordnet sind. Es sind also Absaugöffnungen 12 am aufsteigenden Teil 7, am Ausleger 8 und am Fuß 9 der Säule 2 vorhanden. Anders als hier dargestellt sind die Absaugöffnungen 12 vorzugsweise näher neben den Luftausströmöffnungen 6 liegend. In der hier gezeigten Darstellung sind ferner die Absaugöffnungen 12 in Fahrrichtung vor den Luftausströmöffnungen 6 angeordnet. Diese Anordnung kann umgekehrt werden. Ferner sind andere Anordnungen möglich, worauf in nachfolgenden Figuren eingegangen wird. Aufgabe der Absaugöffnungen 12 ist es, den Luftstrom L aus den einzelnen Luftausströmöffnungen 6 wieder abzusaugen, nachdem der Luftstrom L Schmutz von einer Oberfläche eines durchfahrenden Fahrzeugs gelöst und in den Luftstrom aufgenommen hat.

Die Absaugöffnungen 12 sind über die Lufttransportleitung 13 mit der Absaugeinrichtung 14 verbunden, die neben der zweiten Säule 3 angeordnet ist. Stattdessen könnte eine weitere Absaugeinrichtung an der Säule 2 angeordnet sein. In diesem Beispiel ist die Lufttransportleitung 13 unter dem Gleis 4 hindurchgeführt. In der Lufttransportleitung 13 wird durch die Absaugeinrichtung 14 ein Unterdruck erzeugt, sodass Luft L in die Absaugöffnungen 12 eingesaugt wird. Die Absaugeinrichtung 14 weist ein nicht näher dargestelltes Gebläse auf, welches einen Unterdruck erzeugt. Im Inneren der Absaugeinrichtung 14 ist ein Sammelbehältnis 37 vorgesehen, im dem Schmutz aus dem durch die Absaugöffnungen 12 abgesaugten Luft-Schmutzgemisch gesammelt wird. Die abgesaugte Luft fließt als Luftstrom L2 durch den Filter 38, der den Schmutz aus dem Luftstrom L2 heraus filtert.

Die zweite Säule 3 ist strukturell und funktionell spiegelsymmetrisch zu der ersten Säule 2, sodass die vorangehende Beschreibung der Säule 2 auf die Säule 3 übertragbar ist. An der Säule 3 sind die Luftausströmöffnungen 15, die Lufttransportleitung 16, die Einrichtung 17 zur Erzeugung von Druckluft, die Absaugöffnungen 18, die Lufttransportleitung 19 zum Transport der abgesaugten Luft vorhanden. Der Ausleger am oberen Ende der zweiten Säule 3 ist mit 20 bezeichnet, der Fuß an der zweiten Säule mit 21.

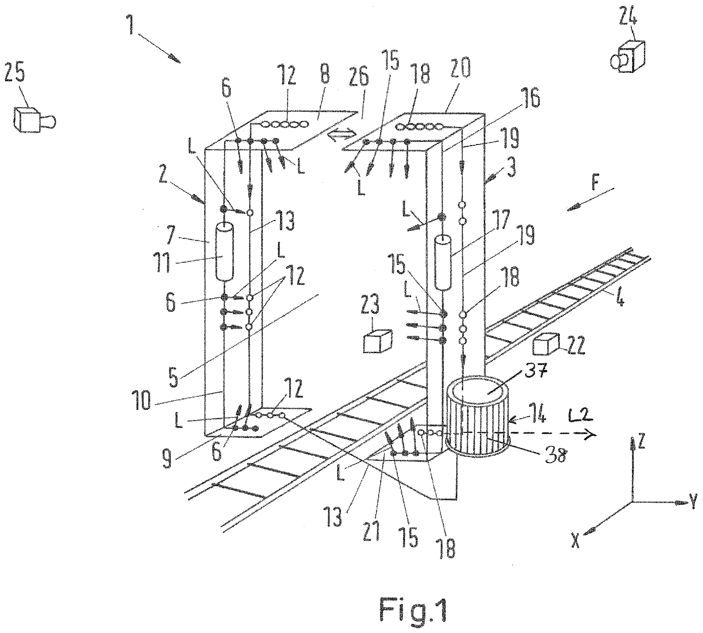

Fig. 1 zeigt weiterhin Sensoren 22, 23 die beidseitig des Gleises 4 und in Fahrrichtung F vor der Reinigungseinrichtung 1 angeordnet sind. Die Sensoren 22, 23 können eine Lichtschranke ausbilden, die zwischen den Sensoren ausgebildet ist, oder schalterbasierte Systeme sein, die beim Vorbeifahren eines Schienenfahrzeugs auslösen. Jedenfalls detektieren die Sensoren 22, 23 ein vorbeifahrendes Schienenfahrzeug und geben ein Schaltsignal an die Reinigungseinrichtung 1, durch welches die Einrichtungen 11, 17 zur Erzeugung der Druckluft und die Absaugeinrichtung 14 in Betrieb gesetzt werden, sodass die Reinigungseinrichtung 1 in Betrieb gesetzt wird. Beispielsweise sind die Reinigungseinrichtung 1 bzw. die Säulen 2, 3 in einer Einfahrt, insbesondere einem Tor, oder vor einer Einfahrt oder einem Tor, eines Schienenfahrzeugdepots installiert, sodass bei Einfahrt eines Schienenfahrzeugs die Reinigungseinrichtung in Betrieb gesetzt und bei Einfahrt in das Depot das Schienenfahrzeug gereinigt wird.

Ferner sind in Fig. 1 die Bilderfassungseinrichtungen 24, 25, hier in Form von Kameras, dargestellt. Die Kamera 24 ist in Fahrrichtung vor der Durchfahrt 5 angeordnet und die Kamera 25 hinter der Durchfahrt 5. Somit kann mit der Kamera 24 der Verschmutzungszustand eines Fahrzeugs vor Durchfahren der Reinigungseinrichtung 1 und mit der Kamera 25 der Verschmutzungszustand danach festgestellt werden. Beide Kameras 24, 25 sind mit einer hier nicht dargestellten Bildauswertungseinrichtung verbunden, in welcher der Verschmutzungszustand bewertet, vorzugsweise automatisch verglichen, werden kann. Die Kameras 24, 25 sind ebenfalls mit den Sensoren 22, 23 verbunden. Somit werden durch Auslösung der Sensoren 22, 23 durch ein vorbeifahrendes Schienenfahrzeug auch die Kameras 24, 25 in Betrieb gesetzt. Beide Kameras 24, 25 können in hier nicht näher dargestellter Weise drehbar um eine oder mehrere Raumachsen und/oder verschiebbar entlang einer oder mehrerer Raumrichtungen gelagert sein, sodass verschiedene Bereiche eines durchfahrenden Schienenfahrzeugs bildlich erfasst werden können. Ferner können weitere Kameras als die hier dargestellten vorhanden sein, die auf andere Bereiche des Schienenfahrzeugs gerichtet sind.

Zwischen dem ersten Ausleger 8 und dem zweiten Ausleger 20 ist der Zwischenraum 26 gebildet. Der Zwischenraum 26 dient als Freiraum zur Hindurchführung von Stromabnehmern eines durchfahrenden Schienenfahrzeugs, die im Falle eines durchgehenden Portals mit diesem Portal kollidieren würden. Sofern die Reinigungseinrichtung 1 nicht für elektrisch betriebene Schienenfahrzeuge ausgestaltet ist, kann die Reinigungseinrichtung 1 allerdings ein durchgehendes Portal aufweisen, d.h. die Ausleger 8, 20 wären zur einer durchgehenden Traverse verbunden.

Es kann ferner vorgesehen sein, dass der Abstand der Säulen 2, 3 in Y-Richtung, d.h. Querrichtung (siehe eingezeichnetes Koordinatensystem), veränderbar ist. Hierzu können beide Säulen 2, 3 auf nicht näher dargestellten Gleitlagern gelagert sein und mit einer Verschiebe- bzw. Antriebseinrichtung verbunden sein. Durch eine Abstandsänderung der Säulen 2, 3 in Querrichtung Y kann entsprechend der Zwischenraum 26 in seiner Breite vergrößert oder verkleinert werden. Die Breite des Zwischenraums ist mit einem Doppelpfeil zwischen den Auslegern 8, 20 dargestellt. Durch eine Abstandsänderung der Säulen 2, 3 kann die Reinigungseinrichtung 1 an verschiedene Fahrzeugbreiten angepasst werden oder an verschiedene Breiten von Dachaufbauten, wie Stromabnehmern.

Weiterhin können die Säulen 2, 3 in Z-Richtung verstellbar sein, insbesondere nach oben verlängerbar bzw. nach unten verkürzbar sein. Hierdurch kann die Reinigungseinrichtung 1 an verschiedene Fahrzeughöhen angepasst werden. Beispielsweise kann jede der Säulen 2, 3 aus zwei ineinander verschiebbaren Säulensegmenten gebildet sein. Beispielsweise ist ein oberes Segment verschiebbar in einem unteren Segment gelagert und kann ein- oder ausgefahren werden, was hier nicht näher dargestellt ist.

Des Weiteren können auch die Ausleger 8 und 20 in der Länge anpassbar sein um auf verschiedene Fahrzeugbreiten optimiert zu werden.

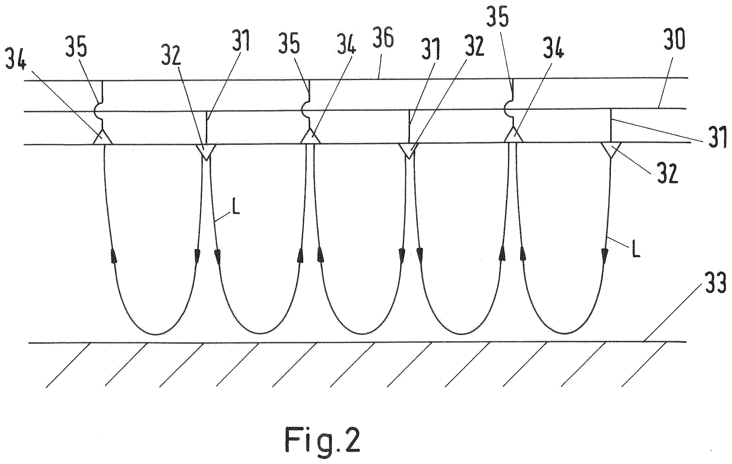

Fig. 2 zeigt eine Detailansicht von Luftausströmöffnungen und Absaugöffnungen sowie den Reinigungsmechanismus der Reinigungseinrichtung 1. Aufgrund anderer Anordnung als in Fig. 1 sind die Luftausströmöffnungen und Absaugöffnungen mit anderen Bezugszeichen bezeichnet und stellen eine alternative Ausführungsform dar.

Durch die Lufttransportleitung 30 wird Druckluft transportiert und in die Abzweige 31 eingeleitet, die in Luftausströmöffnungen 32 münden. Luft L tritt in Richtung der gezeigten Pfeile aus den Luftausströmöffnungen 32 aus und trifft auf die Oberfläche 33 eines Schienenfahrzeugs, die beispielsweise eine Seitenwand, eine Dachfläche oder eine Unterbodenfläche ist. Auf der Oberfläche 33 werden durch den Luftstrom L nicht näher dargestellte Schmutzpartikel gelöst.

Benachbart zu den Luftausströmöffnungen 32 sind Absaugöffnungen 34 angeordnet, die über Abzweigleitungen 35 mit der Lufttransportleitung 36 verbunden sind, in welcher über eine Absaugeinrichtung ein Unterdruck erzeugt wird. Wie in Fig. 2 gezeigt, wird der Luftstrom L nach Auftreffen auf die Oberfläche 33, wo er Schmutzpartikel löst, durch den Unterdruck an den Absauföffnungen 34 wieder von der Oberfläche 33 weggeleitet und in die Absaugöffnungen 34 bzw. die Absaugleitungen 35, 36 eingesaugt, wobei abgelöste Schmutzpartikel mit abtransportiert werden.

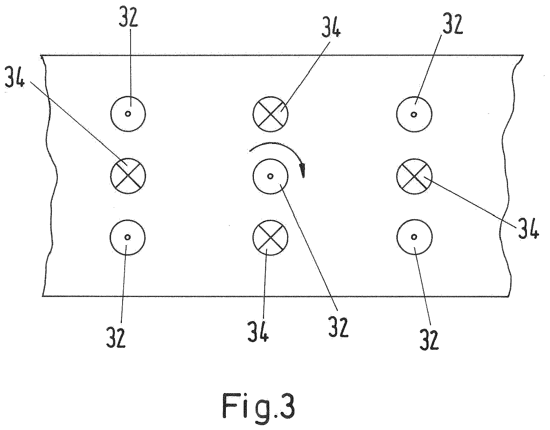

In Fig. 3 ist eine Draufsicht auf die Anordnung von Luftausströmöffnungen 32 und Absaugöffnungen 34 gezeigt. Beispielsweise sind die Luftausstromöffnungen 32 und Absaugöffnungen 34 auf der Unterseite eines in Fig. 1 gezeigten Auslegers 8 in diesem Muster angeordnet, alternativ oder zusätzlich in dem Säulenabschnitt 7, alternativ oder zusätzlich an dem Fuß 9. Fig. 3 zeigt eine versetzte Anordnung der Luftausströmöffnungen 32 und Absaugöffnungen 34, die ineinander verteilt angeordnet sind. Im vorliegenden Fall bilden sowohl die Luftausströmöffnungen 32 als auch die Absaugöffnungen 34 ein regelmäßiges Muster in Form eines netzartigen Systems. Beide Muster sind ineinander greifend angeordnet. Hierbei wird ein System benachbarter Luftausströmöffnungen 32 und Absauföffnungen 34 geschaffen, das sich flächig erstreckt.

Die Luftausströmöffnungen 32 sind in Form rotierender Düsen ausgestaltet. Die Düsen rotieren beispielsweise im Uhrzeigersinn. Dadurch wird der ausströmende Luftstrom besser verteilt bzw. überstreicht eine größere Region einer Oberfläche 33. Je nachdem, in welche Richtung eine Düse 32 gerade strömt, kann der Luftstrom von einer oder mehreren der benachbarten Absaugöffnungen 34 aufgenommen werden. Ist beispielsweise die in Fig. 3 mittlere Ausströmdüse 32 gerade nach rechtsgerichtet, kann der Luftstrom am besten von der rechts benachbarten Absauföffnung 34 aufgenommen werden, ist sie nach unten gerichtet, wird der Luftstrom vorwiegend von der in Fig. 3 unter der mittleren Ausströmdüse 32 angeordneten Absaugöffnung 34 aufgenommen usw.

### Bezugszeichenliste

- 1: Reinigungseinrichtung
- 2: erste Säule
- 3: zweite Säule
- 4: Gleis
- 5: Durchfahrtsraum
- 6: Luftausströmöffnung
- 7: aufstrebender Teil
- 8: Ausleger
- 9: Fuß
- 10: Lufttransportleitung
- 11: Einrichtung zur Erzeugung der Druckluft (Kompressor)
- 12: Absaugöffnung
- 13: Lufttransportleitung
- 14: Absaugeinrichtung
- 15: Luftausströmöffnung
- 16: Lufttransportleitung
- 17: Einrichtung zur Erzeugung der Druckluft
- 18: Absaugöffnungen
- 19: Lufttransportleitung
- 20: Ausleger
- 21: Fuß
- 22, 23: Sensor
- 24, 25: Bilderfassungseinrichtung (Kamera)
- 26: Zwischenraum
- 30: Lufttransportleitung
- 31: Abzweig
- 32: Luftausströmöffnung
- 33: Oberfläche
- 34: Absaugöffnung
- 35, 36: Absaugleitung
- 37: Sammelbehältnis
- 38: Filter
- F: Fahrrichtung
- L: Luftstrom
- L2: Luftstrom

## Patentansprüche

1. Reinigungseinrichtung (1) für ein Fahrzeug, aufweisend
- eine erste Säule (2), die in einer Fahrrichtung (F) des Fahrzeugs rechts angeordnet ist und eine zweite Säule (3), die in einer Fahrrichtung (F) des Fahrzeugs links angeordnet ist, sodass zwischen den Säulen ein Aufenthaltsraum oder Durchfahrtsraum (5) für ein Fahrzeug gebildet ist,
- Luftausströmöffnungen (6, 15; 32), die an der ersten Säule und an der zweiten Säule angeordnet sind und in Richtung des Aufenthaltsraums oder Durchfahrtsraums weisen,
- Absaugöffnungen (12, 18; 34), die an der ersten Säule und an der zweiten Säule angeordnet sind und in Richtung des Aufenthaltsraums oder Durchfahrtsraums weisen,
- zumindest eine Einrichtung (11, 17) zur Erzeugung von Druckluft, die über zumindest eine Lufttransportleitung (10, 16; 30, 31) mit den Luftausströmöffnungen (6, 15; 32) verbunden ist,
- zumindest eine Absaugeinrichtung (14), die über zumindest eine Lufttransportleitung (13, 19; 35, 36) mit den Absaugöffnungen verbunden ist und die ein Sammelbehältnis (37) zum Sammeln von Schmutz aufweist.

2. Reinigungseinrichtung nach Anspruch 1, wobei die erste Säule (2) und die zweite Säule (3) ortsfest sind.

3. Reinigungseinrichtung nach Anspruch 1, wobei die erste Säule (2) und die zweite Säule (3) in Fahrzeuglängsrichtung verfahrbar sind.

4. Reinigungseinrichtung nach einem oder mehreren der vorangehenden Ansprüche, wobei an der ersten Säule (2) und an der zweiten Säule (3) die Luftausströmöffnungen (32) und die Absaugöffnungen (34) ineinander verteilt angeordnet sind.

5. Reinigungseinrichtung nach einem oder mehreren der vorangehenden Ansprüche, wobei die Luftausströmöffnungen (6, 15; 32) rotierende Düsen sind.

6. Reinigungseinrichtung nach einem oder mehreren der vorangehenden Ansprüche, wobei
- die erste Säule (2) einen Ausleger (8) an einem oberen Ende aufweist, der nach innen gerichtet ist,
- die zweite Säule (3) einen Ausleger (20) an einem oberen Ende aufweist, der nach innen gerichtet ist,
- wobei die Luftausströmöffnungen (6, 15; 32) und die Absaugöffnungen (12, 18; 34) zumindest teilweise an den Auslegern (20) angeordnet sind.

7. Reinigungseinrichtung nach Anspruch 6, wobei zwischen dem ersten Ausleger (8) und dem zweiten Ausleger (20) ein Zwischenraum (26) gebildet ist.

8. Reinigungseinrichtung nach einem oder mehreren der vorangehenden Ansprüche, wobei
- die erste Säule (2) einen Fuß (9) an einem unteren Ende aufweist, der nach innen gerichtet ist,
- die zweite Säule (3) einen Fuß (21) an einem unteren Ende aufweist, der nach innen gerichtet ist,
- wobei die Luftausströmöffnungen (6, 15; 32) und die Absaugöffnungen (12, 18; 34) zumindest teilweise an den Füßen angeordnet sind.

9. Reinigungseinrichtung nach einem oder mehreren der vorangehenden Ansprüche, wobei der Abstand zwischen der ersten Säule (2) und der zweiten Säule (3) veränderbar ist.

10. Reinigungseinrichtung nach einem oder mehreren der vorangehenden Ansprüche, wobei die erste Säule und die zweite Säule höhenverstellbar sind.

11. Reinigungseinrichtung nach einem oder mehreren der vorangehenden Ansprüche, aufweisend eine Bilderfassungseinrichtung (24, 25), die zur Erfassung des Verschutzungszustandes eines Fahrzeugs nach einem Durchfahren der Reinigungseinrichtung eingerichtet ist.

12. Reinigungseinrichtung nach einem oder mehreren der vorangehenden Ansprüche, aufweisend zumindest einen Sensor (22, 23), der ausgestaltet ist, ein Einfahren eines Fahrzeugs in die Reinigungseinrichtung zu detektieren.

13. Reinigungseinrichtung nach einem oder mehreren der vorangehenden Ansprüche, aufweisend einen Bodenbereich, der einen Gleisabschnitt (4) für ein Schienenfahrzeug aufweist oder zur Verlegung eines Gleises vorbereitet oder ausgestaltet ist.

14. Verfahren zur Reinigung eines Fahrzeugs, wobei eine Reinigungseinrichtung nach einem oder mehreren der Ansprüche 1-13 eingesetzt wird, und aufweisend die Schritte
- Strömen von Luft (L), die aus Luftausströmöffnungen (6, 15; 32) der Reinigungseinrichtung ausströmt, auf eine Oberfläche (33) des Fahrzeugs, wobei Schmutz von der Oberfläche (33) gelöst wird und ein Luft-Schmutzgemisch gebildet wird,
- Absaugen des Luft-Schmutzgemisches durch Absaugöffnungen (12, 18; 34) der Reinigungseinrichtung.

## Claims

1. A cleaning device (1) for a vehicle, comprising:
- a first column (2), which is arranged on the right in a travel direction (F) of the vehicle, and a second column (3), which is arranged on the left in a travel direction (F) of the vehicle, so that a residence area or a passage area (5) for a vehicle is formed between the columns;
- air outflow openings (6, 15; 32), which are arranged on the first column and on the second column and oriented in the direction of the residence area or passage area;
- extraction openings (12, 18; 34), which are arranged on the first column and on the second column and oriented in the direction of the residence area or passage area;
- at least one device (11, 17) for generating compressed air, which is connected via at least one air transport line (10, 16; 30, 31) to the air outflow openings (6, 15; 32); and
- at least one extraction device (14), which is connected via at least one air transport line (13, 19; 35, 36) to the extraction openings and which comprises a collection container (37) for collecting dirt.

2. The cleaning device according to claim 1, wherein the first column (2) and the second column (3) are stationary.

3. The cleaning device according to claim 1, wherein the first column (2) and the second column (3) can be displaced in the vehicle longitudinal direction.

4. A cleaning device according to one or more of the preceding claims, wherein the air outflow openings (32) and the extraction openings (34) are distributed inside one another on the first column (2) and on the second column (3).

5. A cleaning device according to one or more of the preceding claims, wherein the air outflow openings (6, 15; 32) are rotating nozzles.

6. A cleaning device according to one or more of the preceding claims, wherein
- the first column (2) comprises a boom (8) at an upper end, which is oriented inwardly, and
- the second column (3) comprises a boom (20) at an upper end, which is oriented inwardly,
- the air outflow openings (6, 15; 32) and the extraction openings (12, 18; 34) being at least partially disposed on the booms (20).

7. The cleaning device according to claim 6, wherein a space (26) is formed between the first boom (8) and the second boom (20).

8. A cleaning device according to one or more of the preceding claims, wherein
- the first column (2) comprises a foot (9) at a lower end, which is oriented inwardly, and
- the second column (3) comprises a foot (21) at a lower end, which is oriented inwardly,
- the air outflow openings (6, 15; 32) and the extraction openings (12, 18; 34) being at least partially disposed on the feet.

9. A cleaning device according to one or more of the preceding claims, wherein the distance between the first column (2) and the second column (3) can be varied.

10. A cleaning device according to one or more of the preceding claims, wherein the first column and the second column are height-adjustable.

11. A cleaning device according to one or more of the preceding claims, comprising an image acquisition device (24, 25), which is configured to detect the soiling state of a vehicle after having passed through the cleaning device.

12. A cleaning device according to one or more of the preceding claims, comprising at least one sensor (22, 23), which is designed to detect a vehicle entering the cleaning device.

13. A cleaning device according to one or more of the preceding claims, comprising a bottom region, which includes a track section (4) for a rail vehicle or is prepared or designed for laying a track.

14. A method for cleaning a vehicle, wherein a cleaning device according to one or more of claims 1-13 is used, and comprising the following steps:
- flowing air (L), which flows out of the air outflow openings (6, 15; 32) of the cleaning device, onto a surface (33) of the vehicle, wherein soiling is removed from the surface (33) and an air/dirt mixture is formed; and
- extracting the air/dirt mixture through extraction openings (12, 18; 34) of the cleaning device.

## Revendications

1. Dispositif de nettoyage (1) pour un véhicule, présentant
- une première colonne (2), qui est disposée à droite dans une direction de déplacement (F) du véhicule, et une deuxième colonne (3), qui est disposée à gauche dans une direction de déplacement (F) du véhicule si bien qu'un espace de séjour ou un espace de passage (5) pour un véhicule est formé entre les colonnes,
- des ouvertures de flux sortant d'air (6, 15 ; 32), qui sont disposées au niveau de la première colonne et au niveau de la deuxième colonne et pointent en direction de l'espace de séjour ou de l'espace de passage,
- des ouvertures d'évacuation par aspiration (12, 18 ; 34), qui sont disposées au niveau de la première colonne et au niveau de la deuxième colonne et pointent en direction de l'espace de séjour ou de l'espace de passage,
- au moins un dispositif (11, 17) servant à générer de l'air comprimé, qui est relié aux ouvertures de flux sortant d'air (6, 15 ; 32) par l'intermédiaire d'au moins un conduit de transport d'air (10, 16 ; 30, 31),
- au moins un dispositif d'évacuation par aspiration (14), qui est relié aux ouvertures d'évacuation par aspiration par l'intermédiaire d'au moins un conduit de transport d'air (13, 19 ; 35, 36) et qui présente un récipient collecteur (37) servant à collecter de la saleté.

2. Dispositif de nettoyage selon la revendication 1, dans lequel la première colonne (2) et la deuxième colonne (3) sont stationnaires.

3. Dispositif de nettoyage selon la revendication 1, dans lequel la première colonne (2) et la deuxième colonne (3) peuvent être déplacées dans la direction longitudinale de véhicule.

4. Dispositif de nettoyage selon l'une quelconque ou plusieurs des revendications précédentes, dans lequel les ouvertures de flux sortant d'air (32) et les ouvertures d'évacuation par aspiration (34) sont disposées de manière répartie au niveau de la première colonne (2) et au niveau de la deuxième colonne (3).

5. Dispositif de nettoyage selon l'une quelconque ou plusieurs des revendications précédentes, dans lequel les ouvertures de flux sortant d'air (6, 15 ; 32) sont des buses rotatives.

6. Dispositif de nettoyage selon l'une quelconque ou plusieurs des revendications précédentes, dans lequel
- la première colonne (2) présente au niveau d'une extrémité supérieure un bras (8), qui est dirigé vers l'intérieur,
- la deuxième colonne (3) présente au niveau d'une extrémité supérieure un bras (20), qui est dirigé vers l'intérieur,
- dans lequel les ouvertures de flux sortant d'air (6, 15 ; 32) et les ouvertures d'évacuation par aspiration (12, 18 ; 34) sont disposées au moins en partie au niveau des bras (20).

7. Dispositif de nettoyage selon la revendication 6, dans lequel un espace intermédiaire (26) est formé entre le premier bras (8) et le deuxième bras (20).

8. Dispositif de nettoyage selon l'une quelconque ou plusieurs des revendications précédentes,
dans lequel
- la première colonne (2) présente au niveau d'une extrémité inférieure une embase (9), qui est dirigée vers l'intérieur,
- la deuxième colonne (3) présente au niveau d'une extrémité inférieure une embase (21), qui est dirigée vers l'intérieur,
- dans lequel les ouvertures de flux sortant d'air (6, 15 ; 32) et les ouvertures d'évacuation par aspiration (12, 18 ; 34) sont disposées au moins en partie au niveau des embases.

9. Dispositif de nettoyage selon l'une quelconque ou plusieurs des revendications précédentes, dans lequel la distance entre la première colonne (2) et la deuxième colonne (3) peut être modifiée.

10. Dispositif de nettoyage selon l'une quelconque ou plusieurs des revendications précédentes, dans lequel la première colonne et la deuxième colonne peuvent être ajustées en hauteur.

11. Dispositif de nettoyage selon l'une quelconque ou plusieurs des revendications précédentes, présentant un dispositif de détection d'images (24, 25), qui est mis au point pour détecter l'état d'encrassement d'un véhicule après un passage du dispositif de nettoyage.

12. Dispositif de nettoyage selon l'une quelconque ou plusieurs des revendications précédentes, présentant au moins un capteur (22, 23), qui est configuré pour détecter une entrée d'un véhicule dans le dispositif de nettoyage.

13. Dispositif de nettoyage selon l'une quelconque ou plusieurs des revendications précédentes, présentant une zone de sol, qui présente une section de voie (4) pour un véhicule sur rails ou est préparé ou configuré pour poser une voie.

14. Procédé servant à nettoyer un véhicule, dans lequel un dispositif de nettoyage selon l'une quelconque ou plusieurs des revendications 1 - 13 est employé, et présentant les étapes
- de circulation d'air (L), qui sort d'ouvertures de flux sortant d'air (6, 15 ; 32) du dispositif de nettoyage, sur une surface (33) du véhicule, dans lequel des saletés sont retirées de la surface (33) et un mélange d'air et de saletés est formé,
- d'évacuation par aspiration du mélange d'air et de saletés par des ouvertures d'évacuation par aspiration (12, 18 ; 34) du dispositif de nettoyage.
